(19) Europäisches Patentamt

European Patent Office

Office européen des brevets

(11) **EP 1 050 143 B1**

(12) **EUROPÄISCHE PATENTSCHRIFT**

(45) Veröffentlichungstag und Bekanntmachung des Hinweises auf die Patenterteilung:
**07.04.2004   Patentblatt 2004/15**

(21) Anmeldenummer: **99907261.4**

(22) Anmeldetag: **20.01.1999**

(51) Int Cl.⁷: **H04L 27/26**

(86) Internationale Anmeldenummer:
**PCT/DE1999/000138**

(87) Internationale Veröffentlichungsnummer:
**WO 1999/038301 (29.07.1999 Gazette 1999/30)**

(54) **VERFAHREN ZUR VERARBEITUNG EINES SIGNALS AUS DATENSYMBOLEN**

METHOD FOR PROCESSING A SIGNAL CONSISTING OF DATA SYMBOLS

PROCEDE POUR TRAITER UN SIGNAL A BASE DE SYMBOLES DE DONNEES

(84) Benannte Vertragsstaaten:
**DE ES FR GB IT**

(30) Priorität: **22.01.1998   DE 19802398**

(43) Veröffentlichungstag der Anmeldung:
**08.11.2000   Patentblatt 2000/45**

(73) Patentinhaber: **Micronas Munich GmbH**
**81541 München (DE)**

(72) Erfinder:
• **SCHÖLLHORN, Peter**
**D-82008 Unterhaching (DE)**

• **KINDLER, Matthias**
**D-85579 Neubiberg (DE)**

(74) Vertreter: **Patentanwälte**
**Westphal, Mussgnug & Partner**
**Mozartstrasse 8**
**80336 München (DE)**

(56) Entgegenhaltungen:
**EP-A- 0 682 426**

• **DATABASE WPI Section EI, Week 9516 Derwent Publications Ltd., London, GB; Class T01, AN 95-120767 XP002104225 & JP 07 046221 A (SONY CORP) , 14. Februar 1995**

**Beschreibung**

Die Erfindung bezieht sich auf ein Verfahren zur Verarbeitung eines Signals, über das mit Datensymbolen, die voneinander jeweils durch ein Schutzintervall getrennt sind und die jeweils aus einer bestimmten Anzahl von Trägern zusammengesetzt sind, im Frequenzbereich Daten übertragen werden. Solche Signale sind insbesondere aus der digitalen terrestrischen Fernsehübertragung (Digital Video Broadcasting) bekannt.

Mit solchen Mehrträgerverfahren können Daten auf mehrere Träger verteilt übertragen werden. Bei der parallelen Übertragung wird das gesamte Frequenzband eines Übertragungskanals in mehrere Unterkanäle mit entsprechend kleinerem Frequenzband eingeteilt. Jeder Unterkanal wird mit einer eigenen Datenfolge moduliert.

Ein Unterkanal besteht aus einem Träger, auf dem wie bei herkömmlichen Übertragungsverfahren die eigentliche Information aufmoduliert wird. Bei der parallelen Übertragung sind also mehrere Unterträger vorhanden. Bei orthogonalen Signalen kann die Trennung der Unterkanäle mit Hilfe von Korrelationsverfahren erfolgen. Interferenzstörungen zwischen den einzelnen Kanälen können dadurch beseitigt werden.

Ein standardisiertes Übertragungsverfahren, das parallele Daten und Frequenzmultiplex benutzt, ist das orthogonal frequency devision multiplexing (OFDM). Beim OFDM ist jeder Träger orthogonal zu den anderen Trägern. Bei der digitalen Datenübertragung, so auch bei OFDM, werden die Daten nicht als homogener Datenstrom übermittelt, sondern in einer bestimmten Anordnung, die als Rahmen bezeichnet wird. Beispielsweise besteht jeder Rahmen aus 68 sogenannten Datensymbolen. Jedes Datensymbol wiederum besteht aus einem Satz von mehreren Trägern, die parallel übertragen werden. Die einzelnen Datensymbole sind voneinander durch Schutzintervalle getrennt. Diese dienen dazu, Störungen durch Überlagerungen der Datensymbole untereinander möglichst gering zu halten. Dies ist notwendig, um eine gute Trennung der Unterträger mittels der Fouriertransformation zu erhalten. Die Schutzintervalle erhält man durch periodische Fortsetzung der Signale der jeweiligen Unterträger im Zeitbereich. Dabei macht das Schutzintervall einen Bruchteil der Zeitdauer des Datensymbols, beispielsweise ein Viertel, aus. Die periodische Fortsetzung des Datensymbols durch das Schutzintervall ermöglicht die Aufrechterhaltung der Trägersynchronisation im Empfänger. Zur Synchronisation dienen auch spezielle Referenzträger, die an definierten Stellen innerhalb eines Datensymbols angeordnet sind. Die Anzahl dieser Referenzträger liegt unterhalb der Anzahl der Datenträger, die die eigentliche Information enthalten.

Neben Pilotträgern gehören auch Parameterträger zu den Referenzträgern. Mit den Pilotträgern werden bestimmte Datensequenzen übertragen, deren Wert auf der Empfangsseite bekannt ist. Anhand der Pilotträger, deren Position innerhalb des Rahmens festgelegt ist, kann die Synchronisation des Empfängers mit dem empfangenen Signal erfolgen.

Die Parameterträger übermitteln dem Empfänger die bei der Übertragung benutzten Parameter, wie beispielsweise das Modulationsschema und die Länge des Schutzintervalls.

Für OFDM sind die Anzahl der Daten und Referenzträger sowie weitere Einzelheiten im European Telecomunication Standards ETS 300 744 des European Telecomunications Standards Institut, März 1997, festgelegt.

DATABASE WPI Section EI, Week 9516 Derwent Publications Ltd., London, GB; Class T01, AN 95-120767 XP002104225 & JP 07 046221 A (SONY CORP), 14. Februar 1995 beschreibt einen digitalen Demodulator für ein OFDM Signal.

EP-A-0 682 426 (VICTOR COMPANY OF JAPAN) beschreibt einen OFDM Empfänger mit einer Schaltung (guard interval processing circuit) zur Trennung von Datensymbolintervallen aus dem empfangenen Signal, und einen FFT QAM Demodulator.

Bei der Übertragung eines Signals, das aus Datensymbolen, die durch Schutzintervalle voneinander getrennt sind, besteht, treten Zeitabschnitte mit der Dauer der Schutzintervalle auf, in denen keine Datenträger empfangen werden. Im Datenfluß entstehen also Lücken, deren Größe von der Länge der

Schutzintervalle abhängt. Da am Ausgang des Empfängers üblicherweise ein kontinuierlicher Datenfluß erwünscht ist, werden die Daten in einen Zwischenspeicher eingelesen. Die so zwischengespeicherten Daten werden dann kontinuierlich mit festem Abstand wieder ausgelesen. Als Zwischenspeicher dienen beispielsweise FIFO(first in/first out)-Speicher. Ein solcher Zwischenspeicher vergrößert und verteuert einen Empfangsbaustein.

Aufgabe der vorliegenden Erfindung ist es, ein Verfahren zur Verarbeitung eines Signals, über das mit Datensymbolen, die voneinander jeweils durch ein Schutzintervall getrennt sind, Daten übertragen werden, anzugeben, bei dem auf der Empfangsseite ohne Zwischenspeicherung ein kontinuierlicher Datenstrom erreicht wird.

Diese Aufgabe wird mit einem Verfahren mit den Merkmalen des Patentanspruchs 1 gelöst.

Die Erfindung hat den Vorteil, daß die von der Trennstufe zurückgewonnen Träger nicht zwischengespeichert werden müssen. Auf einen entsprechenden Zwischenspeicher kann verzichtet werden. Ferner wird die weitere Signalverarbeitung erleichtert, da die zu verarbeitenden Träger in kontinuierlicher Folge vorliegen. Die Auswertung kann mit niedrigerer Geschwindigkeit erfolgen, da für die während der Übertragungsdauer eines Datensymbols übermittelten Träger die Übertragungsdauer für das Datensymbol zusammen mit einem Schutzintervall zur Verfügung steht. Die Erfindung wird daher vorteilhaft in Verbindung mit weiteren Verfahren zur Signalverarbeitung eingesetzt.

Zur Signalverarbeitung gehören insbesondere die Detektion von Referenzträgern, die Detektion von Interferenzen sowie die Kanalschätzung, die zur rechnerischen Korrektur der Übertragungsfunktionen des Kanals dient. Dabei werden Abweichungen eines tatsächlichen Übertragungskanals von einem hinsichtlich seiner Übertragungseigenschaften festgelegten Standardkanal ermittelt. Die Schätzung der Übertragungsfunktion erfolgt mit mehreren Referenzträgern durch Interpolation.

Um zu einem bestimmten Zeitpunkt Schätzungen durchführen zu können, sind Referenzträger notwendig, die erst zu einem späteren Zeitpunkt empfangen werden, also zu dem bestimmten Zeitpunkt noch nicht vorhanden sind. Dieses Problem wird dadurch gelöst, daß die Schätzung für den früheren Zeitpunkt auf den späteren Zeitpunkt verlegt wird. Demzufolge wird die Kanalschätzung für einen bestimmten Zeitpunkt verzögert. Die zu dem früheren Zeitpunkt bereits vorhandenen Referenzträgerinformationen müssen wegen der verzögerten Schätzung gespeichert werden.

Die geschätzte Übertragungsfunktion des Kanals dient zur Korrektur der Datenträger. Phase und Amplitude der Datenträger werden so verändert, daß sie mit Phase und Amplitude eines entsprechenden Datenträgers, der über den Standardübertragungskanal übertragen wurde, übereinstimmen.

Zur Signalverarbeitung gehört auch die Detektion von Interferenzen, die beispielsweise bei der Übertragung von analogen Signalen über denselben Kanal auftreten können.

Zweckmäßigerweise werden von den Trägern eines Datensymbols nur diejenigen gespeichert, die für die Signalverarbeitung herangezogen werden müssen.

Ausgestaltungen der Erfindung sind in Unteransprüchen gekennzeichnet.

Die Erfindung wird nachfolgend anhand von in den Figuren der Zeichnung dargestellten Diagrammen näher erläutert. Es zeigen:

Figur 1 eine Gegenüberstellung der Dauer für Übertragung und Auswertung der Träger eines Datensymbols und

Figur 2 ein Zeitdiagramm zur Erläuterung der Funktionsweise der steuerbaren Zählvorrichtung.

Ein zu übertragendes Signal, das aus Datensymbolen, die durch Schutzintervalle voneinander getrennt sind, zusammengesetzt ist, wird beispielsweise zu einem Empfänger übertragen. Die Datensymboldauer sei dabei Tu, die Intervalldauer, also die Zeitdauer eines Schutzintervalls (SI), sei $T_D$. Die Gesamtdauer $T_S$ zur Übertragung eines Datensymbols und des dazugehörigen Schutzintervalls (SI) ist demnach $T_S = T_U + T_D$. Das Signal wird von dem Empfänger aufgefangen und in den Frequenzbereich transformiert, wodurch die einzelnen Träger des Datensymbols zurückgewonnen werden. Zur Transformation eignet sich insbesondere eine Fouriertransformation, für die zur diskreten Auswertung Algorithmen bekannt sind, die ein Signalprozessor einfach durchführen kann. Ein Beispiel für einen solchen Algorithmus ist die Fast-Fouriertransofmration (FFT).

Die auf der Empfangsseite zurückgewonnen Datensymbole weisen den durch die Schutzintervalle vorgegebenen Abstand der Intervalldauer $T_D$ auf. Die den Trägern der Datensymbole aufmodulierten Einzeldaten können durch Demodulation der einzelnen Träger von den Trägern abgetrennt werden. Die Einzeldaten liegen dann in Paketen vor, die ebenfalls den durch die Schutzintervalle bedingten Abstand aufweisen.

Erfindungsgemäß ist daher vorgesehen, nach der Transformation des Signals in den Frequenzbereich die weitere Auswertung der einzelnen Träger so zu steuern, daß sie über die Gesamtdauer $T_S$ annähernd gleichmäßig verteilt durchgeführt wird. Zur Auswertung der Träger eines Anfangsdatensymbols (ADS) wird das Schutzintervall (SI), das zwischen dem Anfangsdatensymbol und dem nachfolgenden Nachfolgerdatensymbol (NDS) mitgenutzt. Die Auswertung der Träger des Anfangsdatensymbols (ADS) muß erst mit Beginn des Nachfolgerdatensymbols (NDS) abgeschlossen sein.

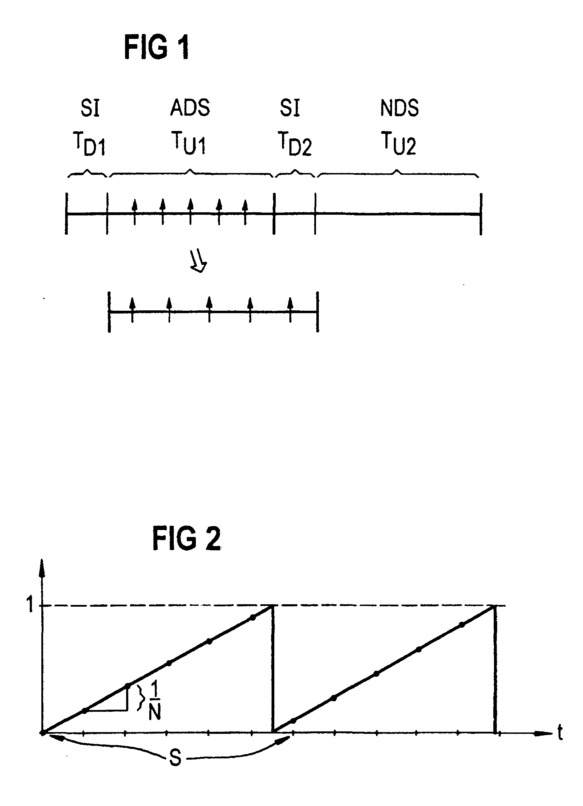

In Figur 1 sind in der oberen Reihe die Datensymboldauer und Intervalldauer des Anfangsdatensymbols (ADS) und des Nachfolgerdatensymbols (NDS) dargestellt. Die senkrechten Pfeile in der Darstellung des Anfangsdatensymbols (ADS) stellen die Träger des Anfangsdatensymbols (ADS) dar. Insbesondere die Darstellung der Träger ist nur schematisch. Ihre Zahl liegt je nach gewähltem Modus laut ETS-Standard für OFDM bei 6 817 bzw. 1705.

Am Ausgang einer Trennstufe, in der beispielsweise die Transformation durchgeführt wird oder die Träger der Datensymbole durch andere Weise zurückgewonnen werden, beispielsweise mittels Filterung, liegen die Datensymbole mit dem zeitlichen Abstand der Intervalldauer $T_D$ an. Die weitere Auswertung der Träger der Datensymbole wird von einer einstellbaren Zählvorrichtung (ZV) gesteuert. Als einstellbare Zählvorrichtung kann ein DTO (Digital Timing Oscillator) verwendet werden. Während einer Synchronisatonsphase, die kleiner ist als die Intervalldauer $T_D$, erhält die einstellbare Zählvorrichtung (ZV) die Parameter, die bei der Übertragung des Signals benutzt wurden. Zu diesen Parametern gehören die Anzahl der Träger, die mit einem Datensymbol übertragen werden und die Intervallzeitdauer $T_D$. Aus der Anzahl der Träger eines Datensymbols kann auf die Datensymboldauer $T_U$ geschlossen werden. Der Quotient aus der dann bekannten Gesamtdauer $T_S$ und der Anzahl der Träger des Datensymbols, die ausgewertet werden sollen, ergibt dann die Zeit, in der die Auswertung eines einzelnen Trägers durchgeführt werden muß. Nicht in jedem Fall ist eine Auswertung aller Träger eines Datensymbols notwendig.

In Figur 1 ist in der zweiten Reihe das Zeitschema der Auswertung der Träger des Anfangsdatensymbols ersichtlich. Auch bei Fortsetzung der dargestellten Träger in der zweiten Reihe der Figur 1 mit den entsprechenden Trägern des Nachfolgerdatensymbols (NDS) ist zwischen den einzelnen Trägern ein annähernd konstanter Abstand vorhanden. Mit diesem Zeitschema werden die Träger vorzugsweise einer Trägerdemodulationseinheit zugeführt. In ihr werden die auf die Träger aufmodulierten Einzeldaten durch Demodulation zurückgewonnen. Die Träger können auch zuerst einer weiteren Signalverarbeitung und dann der Trägerdemodulationseinheit zugeführt werden.

Anhand des Zeitdiagramms der Figur 2 wird erläutert, wie der Auswertungsvorgang durch die einstellbare Zählvorrichtung (ZV) gesteuert wird. Üblicherweise arbeitet die Trennstufe mit einer Systemtaktrate r, die von einem Prozessor vorgegeben wird. Die Abarbeitung der der Trennstufe zugeführten Eingangssignale erfolgt im Rhythmus der Systemtaktrate r. Die Zeit, die für die Auswertung eines Trägers zur Verfügung steht, ist nicht immer ein ganzzahliges Vielfaches der reziproken Systemtaktrate r, also der Zeit, die ein Takt in Anspruch nimmt. Die Anzahl der Takte N, die für die Auswertung eins Trägers notwendig sind, berechnet sich zunächst aus:

$$N = \frac{T_S}{n} \cdot r .$$

Die tatsächliche Taktanzahl $N_I$ ergibt sich durch Aufrunden von N auf die nächstgrößere ganze Zahl. Die Zählvorrichtung berechnet nun die Anzahl der Takte N, die eine gebrochen rationale Zahl sein kann. Beginnend bei 0 wird bei jedem Systemtakt der Wert 1/N aufaddiert. Übersteigt die Summe den Wert 1, beginnt die Zählvorrichtung den Zählvorgang von vorne mit der 0. Gleichzeitig wird die Auswertung des nächsten Trägers angestoßen. Durch diese Vorgehensweise wird eine Rundung der berechneten Anzahl der Takte N zu der tatsächlichen Taktzahl $N_I$ erreicht.

Aus Figur 2 ist ersichtlich, daß eine unterschiedliche Anzahl von tatsächlichen Takten $N_I$ bei der Auswertung zweier aufeinanderfolgender Träger auftreten kann. Die in Figur 2 eingetragenen Punkte kennzeichnen den Systemtakt r. Zu den mit S gekennzeichneten Zeitpunkten wird jeweils eine Trägerauswertung angestoßen.

Für die weitere Signalverarbeitung, beispielsweise die Kanalschätzung, kann es notwendig sein, daß sowohl auf die Träger des aktuellen, als auch auf die des vergangenen Datensymbols zugegriffen werden muß. Die Träger, die nach der Auswertung für eine spätere Verarbeitung benötigt werden, werden in einem gemeinsamen Speicherblock, der eine bestimmte Speicherkapazität aufweist, abgelegt.
Die Träger werden in dem Speicherblock hinsichtlich ihrer Funktion in verschiedenen Gruppen zwischengespeichert. Beim Einlesen der Träger der jeweiligen Gruppe werden die Träger mit dem jeweils ältesten Wert in der jeweiligen Gruppe überschrieben. Dadurch wird eine Pufferung der benötigten Träger mit einem geringen Aufwand an Speicherkapazität ermöglicht. Die Trennstufe liefert die Träger des aktuellen Datensymbols. Je nach Art des Trägers werden zusätzlich zu dem aktuellen Träger die zur Weiterverarbeitung benötigten Werte aus dem Speicherblock ausgelesen und einer entsprechenden Signalverarbeitungseinheit zugeführt. Die aktuellen Träger werden dann ebenfalls in den Speicherblock geschrieben. Die Träger der entsprechenden Trägersorte, die den ältesten Wert aufweisen, werden dabei überschrieben.

Während der Synchronisationsphase kann der Speicherblock zur Ablage von Zwischenergebnissen verwendet werden, die für die Synchronisation zwischengespeichert werden müssen.

## Patentansprüche

1. Verfahren zur Verarbeitung eines Signals, über das mit Datensymbolen (ADS, NDS) der Symbolzeitdauer $T_U$, die voneinander jeweils durch ein Schutzintervall (SI) der Intervallzeitdauer $T_D$ getrennt sind und die jeweils aus einer bestimmten Anzahl von Trägern zusammengesetzt sind, im Frequenzbereich Daten übertragen werden, bei dem die Träger eines der Datensymbole (ADS, NDS) des Signals in einer Trennstufe eines Empfängers im Frequenzbereich zurückgewonnen werden und aus wenigstens einem Teil dieser Träger die mit diesem Datensymbol (ADS, NDS) übertragenen Daten so ermittelt werden, daß sie über die Gesamtzeitdauer $T_S$ aus der Symbolzeitdauer $T_U$ und der Intervallzeitdauer $T_D$ annähernd gleichen zeitlichen Abstand aufweisen.

2. Verfahren zur Verarbeitung eines Signals nach Anspruch 1, **dadurch gekennzeichnet, daß** der Teil dieser Träger mit zwischengespeicherten Trägern einer Signalverarbeitung zugeführt wird.

3. Verfahren zur Verarbeitung eines Signals nach Anspruch 1 oder 2, **dadurch gekennzeichnet, daß** in der Signalverarbeitung eine Kanalschätzung vorgenommen wird.

4. Verfahren zur Verarbeitung eines Signals nach einem der Ansprüche 1 bis 3, **dadurch gekennzeichnet, daß** die Träger hinsichtlich ihrer Funktion in verschiedenen Gruppen zwischengespeichert werden, wobei die Träger, die bei einem früheren Speichervorgang in der jeweiligen Gruppe eingelesen wurden, überschrieben werden.

5. Verfahren zur Verarbeitung eines Signals nach einem der Ansprüche 1 bis 4, **dadurch gekennzeich-**

**net, daß** während einer Synchronisation des Empfängers mit dem Signal nur solche Träger gespeichert werden, die zur Synchronisation benötigt werden.

6. Verfahren zur Verarbeitung eines Signals nach einem der Ansprüche 1 bis 4, **dadurch gekennzeichnet, daß** die Ermittlung der Daten mit Hilfe eines DTO durchgeführt wird.

## Claims

1. A method for processing a signal, via which data is transmitted with data symbols (ADS, NDS) of the symbol duration $T_U$, which are separated from one another in each case by a protection interval (SI) of the interval duration $T_D$ and which are in each case composed of a specific number of carriers, in the frequency range in which the carriers of one of the data symbols (ADS, NDS) of the signal are recovered in a buffer stage of a receiver in the frequency range and from at least one part of these carriers the data transmitted with this data symbol (ADS, NDS) is determined so that it has approximately the same time spacing over the total duration $T_S$ consisting of the symbol duration $T_U$ and the interval duration $T_D$.

2. A method for processing a signal according to Claim 1,
**characterised in that** the part of these carriers with buffered carriers is supplied to a signal processing stage.

3. A method for processing a signal according to Claim 1 or 2,
**characterised in that** channel estimation is performed in the signal processing stage.

4. A method for processing a signal according to one of Claims 1 to 3,
**characterised in that** the carriers are buffered with respect to their function in different groups, with the carriers which were read into the respective group during an earlier storage operation being overwritten.

5. A method for processing a signal according to one of Claims 1 to 4,
**characterised in that** only the carriers which are required for synchronisation are stored during synchronisation of the receiver with the signal.

6. A method for processing a signal according to one of Claims 1 to 4,
**characterised in that** the determination of the data is carried out with the assistance of a DTO.

## Revendications

1. Procédé de traitement d'un signal pour transmettre des données dans une plage de fréquence, avec des symboles de données (ADS, NDS) de durée de symboles Tu, ces symboles étant séparés chaque fois par un intervalle de protection (SI) de durée $T_D$ et se composant chaque fois d'un nombre donné de porteuses, selon lequel on récupère les porteuses d'un symbole de données (ADS, NDS) du signal dans un étage de séparation d'un récepteur dans la plage de fréquence et au moins à partir d'une partie des porteuses on détermine les données transmises avec ce symbole de données (ADS, NDS) qui ont sensiblement le même intervalle de temps pour la durée totale $T_S$ formée de la durée du symbole $T_U$ et de la durée de l'intervalle $T_D$.

2. Procédé de traitement d'un signal selon la revendication 1,
**caractérisé en ce qu'**
on traite le signal de la partie de ces porteuses avec les porteuses enregistrées de façon intermédiaire.

3. Procédé de traitement d'un signal selon la revendication 1 ou la revendication 2,
**caractérisé en ce qu'**
on effectue une évaluation de canal dans le traitement de signal.

4. Procédé de traitement d'un signal selon l'une des revendications 1 à 3,
**caractérisé en ce qu'**
on enregistre de façon intermédiaire les porteuses en différents groupes selon leur fonction, et les porteuses qui ont été enregistrées au cours d'une mise en mémoire précédente dans les différents groupes sont remplacées.

5. Procédé de traitement d'un signal selon l'une des revendications 1 à 4,
**caractérisé en ce que**
pendant une synchronisation du récepteur avec le signal on n'enregistre de façon intermédiaire que les porteuses nécessaires à la synchronisation.

6. Procédé de traitement d'un signal selon l'une des revendications 1 à 4,
**caractérisé en ce qu'**
on détermine les données à l'aide d'un DTO (oscillateur de temps numérique).

# FIG 1

SI     ADS     SI     NDS

$T_{D1}$     $T_{U1}$     $T_{D2}$     $T_{U2}$

# FIG 2